# EUROPEAN PATENT SPECIFICATION

(11) **EP 1 606 922 B1**
(45) Date of publication and mention of the grant of the patent: **03.06.2009**
(21) Application number: 04720808.7
(22) Date of filing: 15.03.2004
(51) Int. Cl.: H04L 29/12, G06F 17/30

(54) **SYSTEM, TERMINAL AND METHOD OF TRANSMITTING INFORMATION UTILIZING A VARIABLE-STRING UNIFORM RESOURCE LOCATOR (URL)**
SYSTEM, TERMINAL UND VERFAHREN ZUR INFORMATIONSÜBERTRAGUNG UNTER VERWENDUNG VON VARIABLE-STRING UNIFORM RESOURCE LOCATOR (URL)
SYSTEME, TERMINAL ET PROCEDE DE TRANSMISSION D'INFORMATIONS A L'AIDE D'URL A CHAINES VARIABLES

(30) Priority: 24.03.2003 US 395581
(43) Date of publication of application: 21.12.2005
(73) Proprietor: Nokia Corporation, 02150 Espoo (FI)
(72) Inventor: MARKS, Bennett, David, Carlisle, MA 01741 (US)
(74) Representative: Read, Matthew Charles
(86) International application number: PCT/US2004/007857
(87) International publication number: WO 2004/086729

(56) References cited:
- WO-A-00/60484
- US-A- 6 032 195
- US-A1- 2002 022 961

## Description

### FIELD OF THE INVENTION

The invention generally relates to transmitting information and, more particularly, relates to systems, terminals and methods for transmitting information utilizing a variable-string uniform resource locator (URL).

### BACKGROUND OF THE INVENTION

With the proliferation of the Internet, many businesses and organizations are finding it increasingly easier to disseminate and request information. In this regard, businesses and organizations have recently began supplementing printed materials with Internet addresses, or uniform resource locators (URLs), for electronic documents or Web pages that a user can access to retrieve further information regarding the printed materials. For example, many printed advertisements also include a URL for a Web page that, when accessed by a user, provides additional information regarding the product advertised.

Whereas the provision of URLs in printed materials facilitates users accessing the associated Web pages, merely providing the URLs has drawbacks. First, users who desire to access the Web pages using the URLs typically must remember the URL so that the associated Web page can be accessed when the user operates an appropriate processing unit, such as a personal computer. In this regard, users must typically memorize the URL or write down the URL. In some instances, however, the printed material can be brought proximate the processing unit such that the user need not remember the URL. For example, consider the cases when the URL has been printed on portable printed materials (e.g., magazines), or when the processing unit is mobile (e.g., mobile PDA of mobile telephone). Even in such instances, even i f the user need not memorize the URL, the user must still manually enter the URL into the processing unit. Requiring the user to manually enter the URL is generally undesirable, and increases the probability that the user will make an error in entering the URL, particularly when the URL is long and/or complicated.

To overcome the drawbacks of including URL's on printed materials, thus requiring manually entering the URL, techniques have been developed to automatically enter a URL into the processing unit such that the associated Web page can be automatically accessed. In this regard, a number of systems have been developed that include printed material having a readable code, such as a barcode, printed thereon. The barcode, then, can contain a URL such that a user having a barcode reader can read the barcode, which can then be transmitted to the processing unit. Ln turn, the processing unit can automatically launch an Internet connectivity software program, such as a conventional Web browser, and automatically access the associated Web page. For a further description of such a system, see U.S. Patent No. 6,510,997, entitled: *Hand-Supportable Bar Code Symbol Reading Device Having an Integrated World Wide Web (WWW) Browser Command Generator for Automatically Generating WWW Browser Program Commands to Initiate the Execution of Hypertext Transmission Protocol (HTTP) Requests*, which issued on January 28, 2003; and U.S. Patent No. 6,108,656, entitled: *Automatic Access of Electronic Information Through Machine-Readable Codes on Printed Documents*, which issued on August 22, 2000.

According to another, but similar technique, printed materials include a radio frequency identification (RFID) tag located on, within or adjacent to the printed materials. Like the barcode, the RFID tag includes a machine-readable code representative of a URL associated with a Web page containing information relative to the printed materials. To access the Web page, then, the code representative of the URL can be transmitted to a radio frequency (RF) receiver. The RF receiver can then pass the code to the processing unit, which can process the code to retrieve the URL, and thereafter launch a Web browser and access the Web page associated with the URL. For more information on such systems, see U.S. Patent Application No. 2002/0116268, entitled: *Information Propagation Device. Information Terminal, Information Provision System and Information Provision Method*, which published on August 22, 2002; and U.S. Patent Application No. 2002/0022961, entitled: *Displaying Information on a Portable Digital Device By Transmission of a Universal Resource Locator Over A Short-Range Radio Frequency Link*, which published on February 21, 2002.

Whereas techniques such as those described above solve many of the drawbacks of printed URLs on printed materials, such techniques also have drawbacks. As will be appreciated, in some instances authors of Web pages have designed the Web pages to either request information from a user, and/or provide customized information to a user. For example, a Web page may request survey information from a user regarding an advertised product. Also, for example, a Web page including scheduling information for public transportation may request information from a user as to a particular departing time, train number, flight number or the like, and thereafter provide customized scheduling information to the user.

In instances in which a Web page requests information from a user and/or provides customized information to a user, techniques such as those described above may be capable of accessing the Web page including one or more fields for receiving information. However, the user must still enter the information, and the processor must transmit the information back to the origin server of the Web page. Then, the origin server typically transmits the customized information to the user, and/or indicates an acknowledgement of receipt of the requested information from the user. In either instance, the transaction of information between the user and the origin server requires an undesirable number of steps, and can take an undesirable amount of time to complete.

WO 00/60484 discloses a system for providing a content file that uses a URL template retrieved from a routing server based on a server identification code retrieved from a machine readable code such as a barcode.

US 5971277 discloses a system and method for retrieving information using data encoded on an object. A client computer can be checked out for use by customers at a store and loaded with information about the customer from a customer information database. As the customer roams the store, the customer may use the computer to scan a barcode on an object for sale. The barcode may comprise an encoded abbreviated URL, which is expanded by the client computer using the preloaded information about the customer. The expanded URL is then communicated to a server to retrieve information requested by the URL, such as information about the object for sale.

### SUMMARY OF THE INVENTION

According to the invention, there is provided a method of transmitting information utilizing a uniform resource locator, URL, the method comprising: receiving information at an apparatus via a short-range wireless communication technique comprising infra-red, radio frequency, barcode or Bluetooth, wherein the information includes a first URL that includes a character string for interpretation at the apparatus; interpreting the character string into an associated request for information from a user or sensor of the apparatus, and thereafter locally requesting the information from the user or sensor; receiving a response to the request for information; and reformatting the first URL to incorporate the response to the request for information to thereby generate a second dynamic URL such that the response to the request for information can be transmitted.

According to the invention, there is also provided an apparatus for transmitting information utilizing a uniform resource locator, URL, wherein the apparatus is adapted to communicate via a communications network, the apparatus comprising: a controller configured to receive information via a local data transfer device and a short-range wireless communication technique comprising infra-red, radio frequency, barcode or Bluetooth, the information including a first URL that includes a character string for interpretation at the apparatus, wherein the controller is configured to interpret the character string into at least one associated request for information from a user or sensor of the apparatus, and thereafter locally request the information from the user or sensor, wherein the controller is also configured to receive a response to the request for information, and to reformat the first URL to incorporate the response to the request for information to thereby generate a dynamic URL such that the response to the request for information can be transmitted.

According to embodiments of the present invention, a variable-string URL can be utilized to automatically request information from a user, and thereafter generate a dynamic URL that includes the requested information. By utilizing the variable-string URL, embodiments of the present invention are capable of transmitting information from a user, and/or providing customized information to a user with a decreased number of steps and required time, as compared to conventional techniques. In this regard, again consider instances such as those described in the background section in which a Web page requests information from a user and/or provides customized information to a user. In such instances, embodiments of the present invention are capable of providing the requested information or constraints for customizing the information, without requiring the user to access a Web page including one or more fields for receiving information or constraints, manually entering the information or constraints, and thereafter transmitting the information.

Furthermore, according to the invention, there is also provided a communications system comprising: an information source configured to transfer information including a first URL that includes a character string for interpretation at a terminal, the information source being configured to transfer the information via a short-range wireless communication technique comprising infra-red, radio frequency, barcode or Bluetooth; and an apparatus adapted to communicate via a communications network, wherein the apparatus is configured to receive information including the first URL from the information source, wherein the apparatus is configured to interpret the character string into at least one associated request for information from a user or sensor of the apparatus, and thereafter locally request the information from the user or sensor, wherein the apparatus is also configured to receive a response to the request for information, and thereafter reformat the first URL to incorporate the response to the request for information to thereby generate a dynamic URL such that the response to the request for information can be transmitted.

The apparatus can thereafter locally request the information at the terminal without generating a network transit. For example, the apparatus can request the information by launching a connectivity software program and thereafter present a display of a request for the information with the connectivity software program. For example, the terminal can reformat the variable-string URL by replacing the at least one variable string with the respective response to the request for information.

As will be appreciated, the variable strings can represent any of a number of different types of information. For example, a variable string can represent a location of the terminal. As further examples, one or more variable strings can represent a numeric value and/or a string of information. When the variable strings represent types of information such as the location of the terminal, the terminal can request permission before receiving the location associated with the terminal. Then, if permission is granted, the terminal can receive the location. At least one variable string can include an associated prompt. In such instances, the apparatus is capable of presenting a display of the prompt to thereby request the information.

More particularly as to the variable-string URL and the dynamic URL, each can identify a domain. In this regard, the system can further include an origin server capable of operating the domain identified in the dynamic URL. As such, the apparatus can be capable of transmitting the requested information to the origin server. For example, the apparatus can transmit the requested information by launching a connectivity software program, populating the connectivity software program with the dynamic URL, establishing a connection with the origin server, and thereafter passing the requested information to a destination identified in the dynamic URL.

Therefore, embodiments of the present invention provide an improved system, apparatus and method for transmitting information. According to embodiments of the present invention, a variable-string URL can be utilized to automatically request information from a user, and thereafter generate a dynamic URL that includes the requested information. By utilizing the variable-string URL, embodiments of the present invention are capable of reducing the amount of steps and time required to transmit information from a user, and/or provide customized information to a user. Therefore, the system, apparatus and method of embodiments of the present invention solve the problems identified by prior techniques and provide additional advantages.

### BRIEF DESCRIPTION OF THE DRAWINGS

Having thus described the invention in general terms, reference will now be made to the accompanying drawings, which are not necessarily drawn to scale, and wherein:
FIG. 1 is a schematic block diagram of a wireless communications system according to one embodiment of the present invention including a cellular network and a data network to which the mobile station is bi-directionally coupled through wireless RF links;
FIG. 2 is a schematic block diagram of a mobile station according to one embodiment of the present invention;
FIG. 3 is a schematic block diagram of a portion of the system of FIG. 1 operating in accordance with one embodiment of the present invention;
FIG. 4 is a control flow diagram illustrating a method of generating a dynamic URL and thereafter transmitting information according to one embodiment of the present invention; and
FIG. 5 is a flow chart illustrating a method of generating a dynamic URL according to one embodiment of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

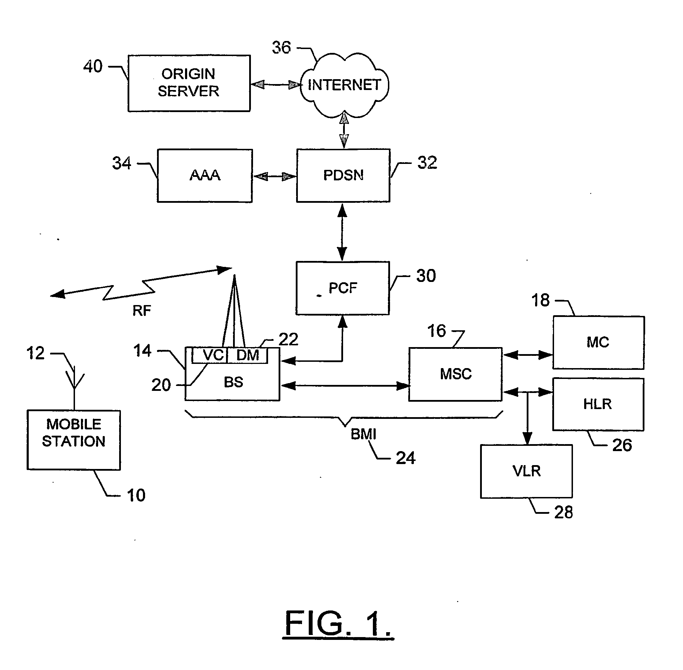

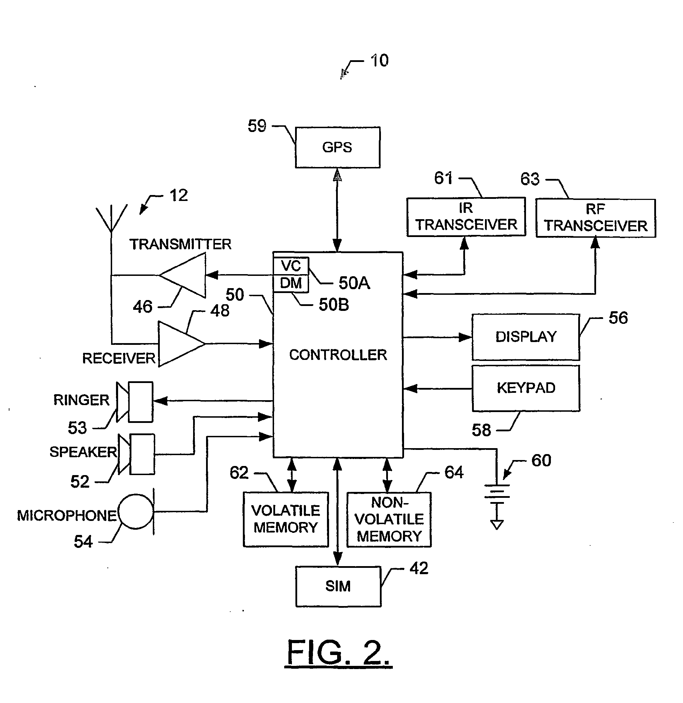

Referring to FIGS. 1 and 2, an illustration of one type of wireless communications network including a terminal, such as a mobile station, that would benefit from the present invention is provided. It should be understood, however, that the mobile telephone illustrated and hereinafter described is merely illustrative of one type of mobile station that would benefit from the present invention and, therefore, should not be taken to limit the scope of the present invention. While several embodiments of the mobile station are illustrated and will be hereinafter described for purposes of example, other types of mobile stations, such as portable digital assistants (PDAs), pagers, and other types of voice and text communications systems, can readily employ the present invention. Moreover, the system and method of the present invention will be primarily described in conjunction with mobile communications applications. But the system and method of the present invention can be utilized in conjunction with a variety of other applications, both in the mobile communications industries and outside of the mobile communications industries.

In addition, while several embodiments of the system and method of the present invention include a terminal comprising a mobile station, the terminal need not comprise a mobile station. In this regard, the terminal can comprise any of a number of other processing devices, such as a personal computer, laptop computer, server computer or the like, capable of operating according to embodiments of the present invention. Moreover, the system and method of the present invention will be primarily described in conjunction with mobile communications applications. It should be understood, however, that the system and method of the present invention can be utilized in conjunction with a variety of other applications, both in the mobile communications industries and outside of the mobile communications industries. For information on other systems that would benefit from embodiments of the present invention, see U.S. Patent No. 6,510,997; U.S. Patent No. 6,108,656; U.S. Patent Application No. 2002/0116268; and U.S. Patent Application No. 2002/0022961.

As shown, the mobile station **10** includes an antenna **12** for transmitting signals to and for receiving signals from a base site or base station (BS) **14.** The base station is a part of a cellular network that includes a mobile switching center (MSC) **16,** a message center (MC) **18,** voice coder/decoders (vocoders) (VC) **20,** data modems (DM) **22,** and other units required to operate the network. The MSC is capable of routing calls and messages to and from the mobile station when the mobile station is making and receiving calls. As indicated above, the cellular network may also be referred to as a Base Station/MSC/Interworking function (BMI) **24.** The MSC controls the forwarding of messages to and from the mobile station when the station is registered with the network, and also controls the forwarding of messages for the mobile station to and from the MC. Such messages may include, for example, voice messages received by the MSC from users of Public Switched Telephone Network (PSTN) telephones, and may also include Short Message Service (SMS) messages and voice messages received by the MSC from the mobile station or other mobile terminals serviced by the network.

Subscriber data of a mobile station **10** is stored permanently in a Home Location Register (HLR) **26** of the system and temporarily in the Visitor Location Register (VLR) **28** in the area of which the mobile station is located at a given moment. In this regard, the VLR contains selected administrative information necessary for call control and provision of the subscribed services for each mobile station currently located in the geographical area controlled by the VLR. Although each functional entity can be implemented as an independent unit, manufacturers of switching equipment generally implement the VLR together with the MSC 16 so that the geographical area controlled by the MSC corresponds to that controlled by the VLR, thus simplifying the signaling required. As such, the MSC and VLR will collectively be referred to herein as the MSC/VLR.

The mobile station **10** can also be coupled to a data network. For example, the base station BS **14** can be connected to a packet control function (PCF) **30,** which is in connection with a Packet Data Serving Node (PDSN) **32.** The PDSN is preferably connected to an AAA server **34,** which provides Authentication, Authorization, and Accounting services. The AAA server can comprise a Remote Access Dialup User Service (RADIUS) server, as will be appreciated by those skilled in the art. The PDSN can also be connected to a wide area network, such as the Internet **36.** In turn, devices such as processing elements (e.g., personal computers, server computers or the like) can be coupled to the mobile station via the PDSN. For example, the processing elements can include one or more processing elements associated with a content server **40,** as illustrated in FIG. 1 and described more fully below. By directly or indirectly connecting both the mobile station **10** and the other devices to the PDSN and the Internet, the mobile station can communicate with the other devices, such as according to the Internet Protocol (IP) specification, to thereby carry out various functions of the mobile station.

Reference is now drawn to FIG. 2, which illustrates a block diagram of a mobile station **10** that would benefit from the present invention. The mobile station includes a transmitter **46,** a receiver **48,** and a controller **50** that provides signals to and receives signals from the transmitter and receiver, respectively. These signals include signaling information in accordance with the air interface standard of the applicable cellular system, and also user speech and/or user generated data. In this regard, the mobile station can be capable of operating with one or more air interface standards, communication protocols, modulation types, and access types. More particularly, the mobile station can be capable of operating in accordance with any of a number of first, second and/or third-generation communication protocols or the like. For example, the mobile station may be capable of operating in accordance with second-generation (2G) wireless communication protocols IS-136 (TDMA), GSM, and IS-95 (CDMA). Some narrow-band AMPS (NAMPS), as well as TACS, mobile terminals may also benefit from the teaching of this invention, as should dual or higher mode phones (e.g., digital/analog or TDMA/CDMA/analog phones).

It is understood that the controller **50** includes the circuitry required for implementing the audio and logic functions of the mobile station 10. For example, the controller may be comprised of a digital signal processor device, a microprocessor device, and various analog to digital converters, digital to analog converters, and other support circuits. The control and signal processing functions of the mobile station are allocated between these devices according to their respective capabilities. The controller thus also includes the functionality to convolutionally encode and interleave message and data prior to modulation and transmission. The controller can additionally include an internal voice coder (VC) **50A,** and may include an internal data modem (DM) **50B.** Further, the controller **50** may include the functionally to operate one or more software programs, which may be stored in memory (described below). For example, the controller may be capable of operating a connectivity program, such as a conventional Web browser. The connectivity program may then allow the mobile station to transmit and receive Web content, such as from origin servers **40,** according to the Wireless Application Protocol (WAP), for example.

The mobile station **10** also comprises a user interface including a conventional earphone or speaker **52,** a ringer **53,** a microphone **54,** a display **56,** and a user input interface, all of which are coupled to the controller **50.** The user input interface, which allows the mobile station to receive data, can comprise any of a number of devices allowing the mobile station to receive data, such as a keypad **58,** a touch display (not shown) or other input device. In embodiments including a keypad, the keypad includes the conventional numeric (0-9) and related keys (#, *), and other keys used for operating the mobile station.

The mobile station further includes a battery **60,** such as a vibrating battery pack, for powering the various circuits that are required to operate the mobile station, as well as optionally providing mechanical vibration as a detectable output, as described below. In addition, the mobile station can include a positioning sensor, such as a global positioning system (GPS) sensor **59.** In this regard, the GPS sensor is capable of determining a location of the mobile station, such as longitudinal and latitudinal directions of the mobile station.

The mobile station **10** can also include memory, such as a subscriber identity module (SIM) **42,** a removable user identity module (R-UIM) or the like, which typically stores information elements related to a mobile subscriber. In addition to the SIM, the mobile station **10** can include other memory. In this regard, the mobile station can include volatile memory **62,** such as volatile Random Access Memory (RAM) including a cache area for the temporary storage of data. The mobile station can also include other non-volatile memory **64,** which can be embedded and/or may be removable. The non-volatile memory can additionally or alternatively comprise an EEPROM, flash memory or the like, such as that available from the SanDisk Corporation of Sunnyvale, California, or Lexar Media Inc. of Fremont, California. The memories can store any of a number of pieces of information, and data, used by the mobile station to implement the functions of the mobile station. For example, the memories can include an identifier, such as an international mobile equipment identification (IMEI) code, capable of uniquely identifying the mobile station **10,** such as to the MSC **16.**

The mobile station **10** can further include an infrared transceiver **61** or another local data transfer device so that data can be shared with and/or obtained from other devices such as other mobile stations, car guidance systems, personal computers, printers, printed materials including barcodes and the like. The sharing of data, as well as the remote sharing of data, can also be provided according to a number of different techniques. For example, the mobile station may include a radio frequency transceiver **63** capable of sharing data with other radio frequency transceivers, and/or with a Radio Frequency Identification (RFID) transponder tag, as such is known to those skilled in the art. Additionally, or alternatively, the mobile station may share data using Bluetooth brand wireless technology developed by the Bluetooth Special Interest Group. Further, although not shown, the mobile station may include a barcode reader such that the mobile station may receive data according to barcode data transfer techniques.

As indicated in the background section, techniques that include reading barcodes or radio frequency tags that include URLs to launch a Web browser and access the Web page associated with the URLs have drawbacks. Generally, such techniques do not provide for instances in which the Web pages have been designed to request information from a user and/or provide customized information to a user. According to embodiments of the present invention, then, the mobile station **10** is capable of receiving data that includes a variable-string uniform resource locator (URL) that has one or more variable strings.

The variable-string URL can be received from any number of different information sources, such as any number of different devices capable of transferring information via infrared, radio frequency, barcode and/or Bluetooth transfer techniques. In one embodiment, for example, the information source comprises a barcode having the variable-string URL encoded therein. In another, particularly advantageous, embodiment, the information source comprises an RFID transponder tag. As will be appreciated, in advantageous embodiments of the present invention, the information sources can be located on printed materials, which can be located proximate the mobile station **10** during operation of portions of the present invention, as described below.

The variable-string URL can comprise a conventional URL with one or more variable strings appended to, or interspersed within, the URL. In this regard, the URL may identify a domain and point to a destination location within the domain. As described more fully below, in some instances the variable strings correspond to query information, and in other instances the variable strings correspond to state information. As will be appreciated by those skilled in the art, in instances in which a variable string corresponds to query information, the variable string can be preceded by a query identifier "?". Then, in instances in which the variable string corresponds to state information, the variable string can be preceded by the query identifier "?" followed by a name associated with the state information and an equals designation, i.e., "?Name =".

The variable string can request any of a number of different types of information. For example, as described more fully below, the variable string can request an identifier associated with the mobile station **10,** an indication of the location of the mobile station, a numeric value and/or a string of information. Additionally, or alternatively, the variable string can include a text string capable of being displayed by the mobile station on the display **56.** The variable strings, and the data type requested by the variable string, can be identified in any of a number of different manners. For example, each variable string may be identified with a set of tags with the requested data type locate within the tags, i.e., "##DATA_TYPE##." In this regard, for example, a variable-string URL including a variable string associated with query information may appear as follows: "http://www.domain.net/index/query?##DATA_TYPE##." As a further example, a variable-string URL including a variable string associated with state information may appear as: "http://www.domain.net/index/state?Name=##DATA_TYPE##."

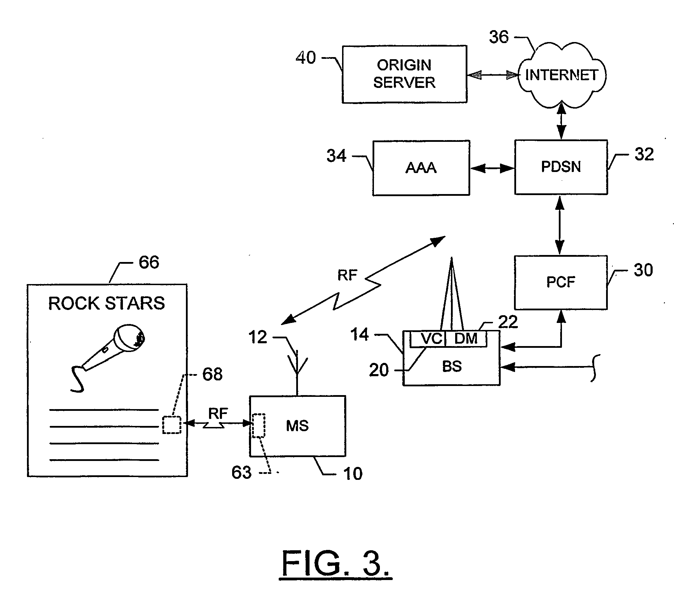

Reference is now drawn to FIGS. 3, 4 and 5 which illustrate operation of the present invention according to one advantageous embodiment. According to this embodiment, the mobile station **10** receives the variable-string URL via radio frequency transfer with an RFID transponder tag although the mobile station can receive the variable-string URL in any of a number of different manners, such as via infrared, radio frequency, barcode and/or Bluetooth transfer techniques. In operation, according to this embodiment, the mobile station initiates interaction with an RFID transponder tag **68.** Interaction with the RFID tag can be accomplished in any of a number of different manners such as, for example, by passing the mobile station within a predefined distance of the RFID tag such that the radio frequency transceiver **63** of the mobile station can receive the variable-string URL.

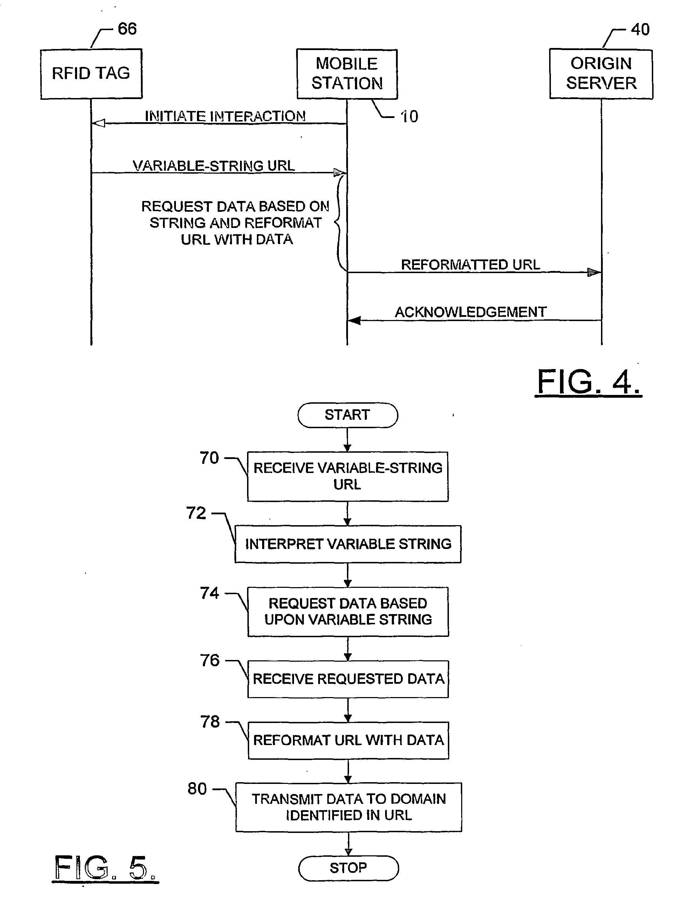

After the mobile station **10** has initiated contact with the RFID tag **68,** the mobile station can receive the variable-string URL from the RFID tag, as shown in block **70** of FIG. 5. Once the mobile station has received the variable-string URL, the controller **50** can interpret the variable strings located in the variable-string URL, such as by recognizing a set of coded tags associated with the variable strings, as illustrated in block **72** and described above.

After interpreting the variable strings, the controller **50** can then request information based upon the variable strings, as shown in block **74** of FIG. 5. Advantageously, by including the variable strings in the variable-string URL, the controller can request the information locally at the mobile station **10** without generating a network transit on either the cellular or data networks. For example, the controller can present (on display **56)** a request for a numeric choice on the display **56,** such as by recognizing the variable string "##CHOICE##." Also, for example, the controller can request a mobile station identifier, such as a mobile station international ISDN (MSISDN) number, which may be stored in the SIM **42.** In this example, the variable string may appear as follows: "##ID##." As another example, the controller can request a position of the mobile station, such as from the GPS sensor **59,** by recognizing the variable string "##LOC##." As yet a further example, the controller present a request for a string of one or more characters, such as by recognizing the variable string "##STR:XXX##," where "XXX" indicates the format of the requested string. Although the examples given herein have presented a format for the variable strings, along with a number of different variable strings, it should be understood that the format, as well as the variable strings, are only for illustrative purposes. Therefore, the variable strings and format of such described herein should not in any way be taken to limit the scope of the present invention.

As will be appreciated, in general, each data type can be associated with a predefined semantic. The variable string data type (e.g., CHOICE, ID, LOC, STR) defines the acceptable data type for the information requested, and can also define or be associated with a specified format. For example, as indicated above, STR:XXX defines the format of the characters requested, i.e., "XXX." Also, for example, if the variable-string URL included the variable string ##STR:NNN-NNN-NNNN##, then the controller can request a string of numbers ("N") such as 123-456-7890, which can represent a telephone number, for example. In the case of a numeric choice, the controller **50** is configured to request a numeric choice, which can have any number of digits, but typically has a single digit 0-9.

Upon requesting the information, the controller **50** can receive the information, such as via the user input interface, the SIM **42** and/or the GPS sensor **59,** as shown in block **76** of FIG. 5. When the controller interprets a variable string as requesting a numeric choice or a string of one or more characters, the controller can present a default request for such information. For example, the controller can present on the display **56** the following request for a numeric choice: "Please select a choice." As another example, when the controller interprets the variable string as requesting a string of characters, the controller can present on the display the following request: "Please enter a string."

As will be appreciated, in some instances, it is desirable to present on the display 56 a more customized request for data or, more generally, a customized statement. In such instances, as indicated above, the variable string can include a text string capable of being presented by the mobile station **10** display 56. In such an instance, the controller **50** can interpret the variable string PROMPT:"[Prompt Text] and thereafter present the "Prompt Text." Advantageously, the variable string indicating text to be presented can be appended to any of the other data types within any of the other variable strings such that the presented text is associated with the respective request for information. For example, consider the following variable string ##CHOICE:PROMPT:"Who's your favorite singer (1-6)?"##. Upon interpreting the variable string, the controller can present on the display the prompt, "Who's your favorite singer (1-6)?". Upon presenting the prompt, the user may enter, such as via the user input interface, a numeric choice to be received by the controller.

When the data requested by the controller **50** does not require user input, such as when the data comprises the mobile station **10** identifier and/or the location of the mobile station, the controller can, but need not, present a request on the display **56** seeking permission from the user to receive, and thereafter transmit, such information. The request seeking permission can be displayed at any point prior to transmitting the information (described below) such that the user may either grant or deny permission for the mobile station to transmit the requested information. For example, the request seeking permission may be presented before the controller requests the information from the SIM **42** and/or the GPS sensor **59.** Alternatively, for example, the request seeking permission may be presented after the controller has requested and received the information, but before the information has been transmitted (described below). By presenting the request for permission, a user of the mobile station may either grant or deny permission (via any conventional means) for the mobile station to transmit the requested information.

The request for such information and/or permission can be presented on the display **56** in any of a number of different manners. For example, the controller 50 can present a textual display requesting such information and/or permission. Alternatively, for example, upon interpreting the variable strings, the controller can launch a connectivity program, such as a conventional Web browser, as such is well known to those skilled in the art. Upon launching the connectivity program, the connectivity program can thereafter present on the display the requests for information and/or permission.

After the controller **50** has received the requested information based upon the variable strings in the variable-string URL, the controller can reformat the variable-string URL to thereby generate a dynamic URL that includes the requested information. Although the variable-string URL can be reformatted in any of a number of different manners, in one embodiment the variable-string URL is reformatted to include the requested information in place of the respective variable strings, as shown in block **78** of FIG. 5. For example, presume that the variable-string URL appeared as follows:
"http://www.busschedules.com/manhattan/getsched?##STR:NNN##," and, upon presenting the request for a numeric string (i.e., denoted by the placeholder "N") of three numbers, the controller received the string "312," as described below. In such an instance, the controller can reformat the variable-string URL to thereby generate the following dynamic URL:
   "http://www.busschedules.com/manhattan/getsched?312" (i.e., replacing "##STR:NNN##" with "312" in the variable-string URL).

In instances in which the user denies permission for the mobile station 10 to transmit information such as the mobile station identifier and/or the location of the mobile station, the controller **50** may respond in any of a number of different manners. For example, the controller may stop processing the variable-string URL thereby not generating a dynamic URL. Alternatively, for example, the controller may reformat the variable-string URL with a default response, such as "Not_Provided," in place of the respective variable strings. In either event, the user may additionally be presented with an acknowledgement that the user denied permission.

After the controller **50** has reformatted the variable-string URL to generate the dynamic URL, the controller can transmit the requested information to an origin server **40** operating the domain identified in the dynamic URL, as shown in block **80** of FIG. 5. The requested information can be transmitted to the origin server in any of a number of different manners. In one advantageous embodiment, for example, the controller can launch the connectivity program (if not previously launched to present the requests for information and/or permission). In turn, the dynamic URL can be populated into an address field of the connectivity program. Thereafter, the connectivity program can establish a connection with the domain identified in the dynamic URL, and pass the requested information to the destination location, also identified in the dynamic URL.

Upon receiving the requested information, the respective origin server **40** can return an acknowledgement to the mobile station 10, as such is well known to those skilled in the art. As will be appreciated, however, the origin server need not return an acknowledgement, particularly when the requested information comprises query information. In this regard, when the requested information comprises query information, the origin server can process the query information to thereby obtain results to the query. Thereafter, the origin server can transmit the query results to the mobile station. The controller, or the connectivity program, can thereafter present the query results on the display **56.**

Now that the system and method of embodiments of the present invention have been described, consider the following examples. First, consider Joanie, a typical twelve year old who loves rock music and has her favorites. She of course carries a mobile telephone, as her parents wouldn't feel safe otherwise. As she is walking downtown with friends, she sees a poster that asks her to vote for her favorite rock star from a list on the poster. The poster includes an inexpensive RFID tag attached to the backside of it. When Joanie places her mobile telephone within a short distance of the poster, the RF tag transfers a variable-string URL to her mobile telephone. In this example, the variable-string URL includes two variable strings, one requesting Joanie's choice for her favorite rock star and another requesting to transmit the telephone identifier of Joanie's mobile telephone. In this regard, the variable-string URL may appear as follows: https://www.popstars.com/vote?MyID=##ID##&MyChoice=##CHOICE##.

The controller in Joanie's mobile telephone interprets the variable-string URL, and presents on the display of the telephone the following: "Please select your choice." Joanie looks at the poster, which has a number of rock stars each associated with a number, and chooses #4 associated with Britney Spears. The mobile telephone then presents a request for permission to transmit the identifier of Joanie's mobile telephone, 781-555-4444. Joanie grants permission to transmit the identifier by pressing a designated key on the keypad of her mobile telephone. The mobile telephone then reformats the variable-string URL to thereby generate a dynamic URL including Joanie's choice #4 and her mobile telephone identifier. In this example, the dynamic URL may appear as follows:
https://www.popstars.com/vote?MyID=7814445555&MyChoice=4. Once the dynamic URL has been generated, Joanie's mobile telephone establishes a connection with the origin server operating the "popstars.com" domain, accesses the "vote" location and transmits the numeric choice and mobile telephone identifier. The origin server operating the "popstars.com" domain can then tally her choice.

By requesting, and thereafter receiving, Joanie's mobile telephone identifier, the origin server can limit the number of times Joanie, or any other mobile telephone user, votes in the poll. Thus, if Joanie tries to vote again, the mobile telephone can process the variable-string as before, but the origin server can be configured to not tally the second vote and, instead, return the message "One vote per phone."

Continuing the example of Joanie and the rock star poster, consider that Joanie's friend, Mirra, also has a mobile telephone and tries to vote for Shania Twain (choice #6). Mirra, however, does not grant permission to transmit her mobile telephone identifier. In such an instance, the mobile station can process the variable-string URL as before, but include a default, "Not_Provided." In this regard, the generated dynamic URL can appear as follows:
https://www.popstars.com/vote?MyID=Not_Provided&MyChoice=6. Upon receipt of the numeric choice #6, and the indication that Mirra has not provided her mobile telephone identifier, the origin server can reject Mirra's choice, and return the message "We're sorry, but anonymous voting is not allowed."

Again considering the example of Joanie, presume that the variable-string URL included a customized prompt requesting Joanie to select her favorite rock star. In such an instance, the variable-string URL may appear as follows:
https://www.popstars.com/vote?MyID=##ID##&MyChoice=##CHOICE:
PROMPT: "Who's your favorite singer (1-6)?"##. In this variation, the controller in Joanie's mobile telephone interprets the variable-string URL, and presents on the display of the telephone the following: "Who's your favorite singer (1-6)?" The example then can proceed, as before, with Joanie choosing #4 associated with Britney Spears.

As another example, consider the case of John who desires to take the bus from a bus station to a shopping mall. As John approaches the bus station, he notices that, in place of an up-to-date bus schedule, a sign is posted that instructs users how to obtain an up-to-date bus schedule for a specific bus line from any mobile communications device (e.g., mobile telephone). In this regard, the sign has an RFID tag attached to the back such that when John, per the instructions on the sign, places his mobile telephone within a short distance of the sign, the RFID tag transfers a variable-string URL to his mobile telephone. In this example, the variable-string URL includes one variable string requesting a three-number string specifying a bus line. The variable-string URL may appear as follows: http://www.busschedules.com/manhattan/getsched?##STR:NNN##.

Upon receipt of the variable-string URL, the controller in John's mobile telephone interprets the variable-string URL, and presents on the display of the telephone the following: "Please enter the string." From the instructions on the sign, then, John knows to enter into his mobile telephone the specific bus line that will take him to the shopping mall. Knowing that the 312 bus line serves the route between the bus station and the shopping mall, John enters the string 312 associated with the respective bus line. It should be noted that, as the variable string requests a string with the format of three numbers, if John incorrectly entered a string with more than three numbers or letters, or entered a three-character string including one or more letters, the controller in John's mobile telephone can recognize an incorrect entry, and again ask for a string in a proper format (i.e., a three-number string).

Upon receipt of the bus line string, the mobile telephone then reformats the variable-string URL to thereby generate a dynamic URL including John's requested bus line. In this example, the dynamic URL may appear as follows: http://www.busschedules.com/manhattan/getsched?312. Once the dynamic URL has been generated, Johns mobile telephone establishes a connection with the origin server operating the "busschedules.com" domain, accesses the "manhattan/getsched" location and transmits the string 312. The origin server servicing the "busschedules.com" domain can then search for the up-to-date bus schedule from a database that includes up-to-date schedule information for the bus lines running from the bus stop. After locating the bus schedule for bus line 312, the origin server can transmit the up-to-date bus schedule to John's mobile telephone, which can subsequently present it to John. As such, John can find out exactly what times bus line 312 runs between the bus stop and the shopping mall.

Embodiments of the present invention therefore provide improved an improved system, terminal and method for transmitting information. As described above, a variable-string URL can be utilized to automatically request information from a user, and thereafter generate a dynamic URL that includes the requested information. As such, by utilizing the variable-string URL, embodiments of the present invention are capable of reducing the amount of steps and time required to transmit information from a user, and/or provide customized information to a user.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of transmitting information utilizing a uniform resource locator, URL, the method comprising:
receiving information at an apparatus (10) via a short-range wireless communication technique comprising infra-red, radio frequency, barcode or Bluetooth, wherein the information includes a first URL that includes a character string for interpretation at the apparatus (10);
interpreting the character string into an associated request for information from a user or sensor of the apparatus, and thereafter locally requesting the information from the user or sensor;
receiving a response to the request for information; and
reformatting the first URL to incorporate the response to the request for information to thereby generate a second dynamic URL such that the response to the request for information can be transmitted.

2. A method according to Claim 1, wherein receiving information at an apparatus comprises receiving information at the apparatus (10) from an information source (66), and wherein the information source is located proximate the apparatus.

3. A method according to Claim 1, wherein reformatting the first URL comprises reformatting the first URL by replacing the character string with the respective requested information.

4. A method according to Claim 1, wherein the character string represents a location of the apparatus (10), and wherein interpreting the character string comprises interpreting the character string into a request for the location of the apparatus from a location sensor of the apparatus, and immediately thereafter requesting the location.

5. A method according to Claim 4, further comprising requesting permission before receiving the location, and wherein receiving the response comprises receiving the location if permission is granted.

6. A method according to Claim 1, wherein the character string represents a numeric value, and wherein interpreting the character string comprises interpreting the character string into a request for the numeric value, and immediately thereafter requesting the numeric value.

7. A method according to Claim 1, wherein the character string represents a string of information, and wherein interpreting the character string comprises interpreting the character string into a request for the string of information, and immediately thereafter requesting the string of information.

8. A method according to Claim 1, wherein the character string includes an associated prompt, and wherein requesting the information comprises presenting a display of the prompt to thereby request the information.

9. A method according to Claim 1, wherein requesting the information comprises launching a connectivity software program and thereafter presenting a display of a request for the information in the connectivity software program.

10. A method according to Claim 1, wherein the first URL and the dynamic URL identify a domain, and wherein the method further comprises transmitting the requested information to an origin server (40) operating the domain identified in the dynamic URL.

11. A method according to Claim 10, wherein transmitting the requested information comprises:
launching a connectivity software program, and thereafter populating the connectivity software program with the dynamic URL; and
establishing a connection with the origin server operating the domain identified in the dynamic URL, and thereafter passing the requested information to a destination identified in the dynamic URL.

12. An apparatus (10) for transmitting information utilizing a uniform resource locator, URL, wherein the apparatus is adapted to communicate via a communications network, the apparatus comprising:
a controller (50) configured to receive information via a local data transfer device (61, 63) and a short-range wireless communication technique comprising infra-red, radio frequency, barcode or Bluetooth, the information including a first URL that includes a character string for interpretation at the apparatus (10),
wherein the controller is configured to interpret the character string into at least one associated request for information from a user or sensor of the apparatus, and thereafter locally request the information from the user or sensor, wherein the controller is also configured to receive a response to the request for information, and to reformat the first URL to incorporate the response to the request for information to thereby generate a dynamic URL such that the response to the request for information can be transmitted.

13. An apparatus according to Claim 12, wherein the controller being configured to reformat the first URL includes being configured to replace the character string with the respective requested information.

14. An apparatus according to Claim 12, wherein the character string represents a location of the apparatus, and wherein the controller is configured to interpret the character string into a request for the location of the apparatus from a location sensor of the apparatus, and immediately thereafter to request the location.

15. An apparatus according to Claim 14, wherein the controller is also configured to request permission before receiving the location, and wherein the controller is configured to receive the location if permission is granted.

16. An apparatus according to Claim 12, wherein the character string represents a numeric value, and wherein the controller is configured to interpret the character string into a request for the numeric value, and immediately thereafter to request the numeric value.

17. An apparatus according to Claim 12, wherein the character string represents a string of information, and wherein the controller is configured to interpret the character string into a request for the string of information, and immediately thereafter to request the string of information.

18. An apparatus according to Claim 12 further comprising a display, wherein the character string includes an associated prompt, and wherein the controller is configured to drive the display to present the prompt to thereby request the information.

19. An apparatus according to Claim 12 further comprising a display, wherein the controller is configured to request the information by launching a connectivity software program and thereafter to drive the display to present a request for the information in the connectivity software program.

20. An apparatus according to Claim 12, wherein the first URL and the dynamic URL identify a domain, and wherein the apparatus further comprises a transmitter configured to be driven by the controller to transmit the requested information to an origin server operating the domain identified in the dynamic URL.

21. An apparatus according to Claim 20, wherein the controller is configured to launch a connectivity software program, populate the connectivity software program with the dynamic URL, drive the transmitter to establish a connection with the origin server operating the domain identified in the dynamic URL, and thereafter pass the requested information to a destination identified in the dynamic URL.

22. A communications system comprising:
an information source (66) configured to transfer information including a first URL that includes a character string for interpretation at a terminal (10), the information source being configured to transfer the information via a short-range wireless communication technique comprising infra-red, radio frequency, barcode or Bluetooth; and
an apparatus (10) adapted to communicate via a communications network, wherein the apparatus is configured to receive information including the first URL from the information source, wherein the apparatus is configured to interpret the character string into at least one associated request for information from a user or sensor of the apparatus, and thereafter locally request the information from the user or sensor, wherein the apparatus is also configured to receive a response to the request for information, and thereafter reformat the first URL to incorporate the response to the request for information to thereby generate a dynamic URL such that the response to the request for information can be transmitted.

23. A communications system according to Claim 22, wherein the information source is located proximate the apparatus.

24. A communications system according to Claim 22, wherein the apparatus is configured to reformat the first URL by replacing the character string with the respective requested information.

25. A communications system according to Claim 22, wherein the character string represents a location of the apparatus, and wherein the apparatus is configured to interpret the character string into a request for the location of the apparatus from a location sensor of the apparatus, and immediately thereafter to request the location.

26. A communications system according to Claim 25, wherein the apparatus is configured to request permission before receiving the location, and wherein the apparatus being configured to receive the response includes being configured to receive the location if permission is granted.

27. A communications system according to Claim 22, wherein the character string represents a numeric value, and wherein the apparatus is configured to interpret the character string into a request for the numeric value, and immediately thereafter to request the numeric value.

28. A communications system according to Claim 22, wherein the character string represents a string of information, and wherein the apparatus is configured to interpret the character string into a request for the string of information, and immediately thereafter to request the string of information.

29. A communications system according to Claim 22, wherein the character string includes an associated prompt, and wherein the apparatus is configured to present a display of the prompt to thereby request the information.

30. A communications system according to Claim 22, wherein the apparatus is configured to request the information by launching a connectivity software program and thereafter to present a display of a request for the information in the connectivity software program.

31. A communications system according to Claim 22, wherein the first URL and the dynamic URL identify a domain, wherein the system further comprises an origin server (40) configured to operate the domain identified in the dynamic URL, and wherein the apparatus is configured to transmit the requested information to the origin server.

32. A communications system according to Claim 37, wherein the apparatus being configured to transmit the requested information includes being configured to launch a connectivity software program, populate the connectivity software program with the dynamic URL, establish a connection with the origin server, and thereafter pass the requested information to a destination identified in the dynamic URL.

## Patentansprüche

1. Verfahren zum Übermitteln von Information, unter Verwendung eines Uniform-Resource-Locators (URL), wobei das Verfahren umfasst:
Empfangen von Information an einer Vorrichtung (10) mittels einer kurzreichweitigen drahtlosen Kommunikationstechnik, welche Infrarot, Radiofrequenz, Barcode oder Bluetooth umfasst, wobei die Information eine erste URL umfasst, welche eine Zeichenfolge zur Interpretation an der Vorrichtung (10) umfasst;
Übersetzen der Zeichenfolge in eine entsprechende Abfrage von Information von einem Benutzer oder Sensor der Vorrichtung und danach lokales Abfragen der Information von dem Benutzer oder Sensor;
Empfangen einer Antwort auf die Abfrage von Information; und
Umformatieren der ersten URL, so dass sie die Antwort auf die Abfrage von Information enthält, um **dadurch** eine zweite dynamische URL derart zu erzeugen, dass die Antwort auf die Abfrage von Information übermittelt werden kann.

2. Verfahren gemäß Anspruch 1, wobei das Empfangen von Information an einer Vorrichtung ein Empfangen von Information an einer Vorrichtung (10) von einer Informationsquelle (66) umfasst und wobei sich die Informationsquelle nahe bei der Vorrichtung befindet.

3. Verfahren gemäß Anspruch 1, wobei das Umformatieren der ersten URL ein Umformatieren der ersten URL durch Ersetzen der Zeichenfolge durch die entsprechende abgefragte Information umfasst.

4. Verfahren gemäß Anspruch 1, wobei die Zeichenfolge einen Standort der Vorrichtung (10) darstellt und wobei das Übersetzen der Zeichenfolge ein Übersetzen der Zeichenfolge in eine Abfrage von dem Standort der Vorrichtung von einem Standortsensor der Vorrichtung und sofort danach ein Abfragen des Standortes umfasst.

5. Verfahren gemäß Anspruch 4, welches auch ein Abfragen einer Erlaubnis vor einem Empfangen des Standortes umfasst und wobei ein Empfangen der Antwort ein Empfangen des Standortes umfasst, falls die Erlaubnis gegeben wird.

6. Verfahren gemäß Anspruch 1, wobei die Zeichenfolge einen numerischen Wert darstellt und wobei das Übersetzen der Zeichenfolge ein Übersetzen der Zeichenfolge in eine Abfrage für den numerischen Wert und sofort danach ein Abfragen des numerischen Wertes umfasst.

7. Verfahren gemäß Anspruch 1, wobei die Zeichenfolge eine Informationsfolge darstellt und wobei das Übersetzen der Zeichenfolge ein Übersetzen der Zeichenfolge in eine Abfrage nach der Informationsfolge und sofort danach ein Abfragen der Informationsfolge umfasst.

8. Verfahren gemäß Anspruch 1, wobei die Zeichenfolge eine entsprechende Aufforderung umfasst und wobei das Abfragen der Information ein Darstellen einer Anzeige der Aufforderung umfasst, um **dadurch** die Information abzufragen.

9. Verfahren gemäß Anspruch 1, wobei das Abfragen der Information ein Starten eines Konnektivitätssoftwareprogramms und danach ein Darstellen einer Anzeige der Abfrage der Information in dem Konnektivitätssoftwareprogramm umfasst.

10. Verfahren gemäß Anspruch 1, wobei die erste URL und die dynamische URL eine Domäne bezeichnen und wobei das Verfahren auch ein Übermitteln der abgefragten Information zu einem Ursprungsserver (40), welcher die in der dynamischen URL bezeichnete Domäne betreibt, umfasst.

11. Verfahren gemäß Anspruch 10, wobei das Übermitteln der abgefragten Information umfasst:
Starten eines Konnektivitätssoftwareprogramms, und danach Bestücken des Konnektivitätssoftwareprogramms mit der dynamischen URL; und
Aufbauen einer Verbindung mit dem Ursprungsserver, welcher die in der dynamischen URL bezeichnete Domäne betreibt und danach Übergeben der abgefragten Information zu einem Bestimmungsort, welcher in der dynamischen URL bezeichnet ist.

12. Vorrichtung (10) zum Übermitteln von Information unter Verwendung eines Uniform-Resource-Locators, URL, verwendet, wobei die Vorrichtung eingerichtet ist, um über ein Kommunikationsnetzwerk zu kommunizieren, wobei die Vorrichtung umfasst:
eine Steuereinheit (50), eingerichtet, um Information über eine lokale Datenübermittlungseinheit (61, 63) und eine kurzreichweitige drahtlose Kommunikationstechnik, welche Infrarot, Radiofrequenz, Barcode oder Bluetooth umfasst, zu empfangen, wobei die Information eine erste URL umfasst, welche eine Zeichenfolge zur Übersetzung an der Vorrichtung (10) umfasst;
wobei die Steuereinheit eingerichtet ist, um die Zeichenfolge in wenigstens eine entsprechende Abfrage von Information von einem Benutzer oder Sensor der Vorrichtung zu übersetzen und danach lokal die Information von einem Benutzer oder Sensor abzufragen, wobei die Steuereinheit auch eingerichtet ist, um eine Antwort auf die Abfrage von Information zu empfangen und die erste URL umzuformatieren, so dass sie die Antwort auf die Abfrage von Information enthält, um **dadurch** eine dynamische URL derart zu erzeugen, dass die Antwort auf die Abfrage von Information übermittelt werden kann.

13. Vorrichtung gemäß Anspruch 12, wobei die Konfiguration der Steuereinheit, um die erste URL umzuformatieren eine Konfiguration umfasst, um die Zeichenfolge mit der entsprechenden abgefragten Information zu ersetzen.

14. Vorrichtung gemäß Anspruch 12, wobei die Zeichenfolge einen Standort der Vorrichtung darstellt und wobei die Steuereinheit eingerichtet ist, um die Zeichenfolge in eine Abfrage für den Standort der Vorrichtung von einem Standortsensor der Vorrichtung zu übersetzen und sofort danach den Standort abzufragen.

15. Vorrichtung gemäß Anspruch 14, wobei die Steuereinheit auch eingerichtet ist, um eine Erlaubnis vor einem Empfangen des Standortes abzufragen und wobei die Steuereinheit eingerichtet ist, um den Standort zu empfangen, falls die Erlaubnis gegeben wird.

16. Vorrichtung gemäß Anspruch 12, wobei die Zeichenfolge einen numerischen Wert darstellt, und wobei die Steuereinheit eingerichtet ist, um die Zeichenfolge in einer Abfrage für einen numerischen Wert zu übersetzen und sofort danach den numerischen Wert abzufragen.

17. Vorrichtung gemäß Anspruch 12, wobei die Zeichenfolge eine Informationsfolge darstellt und wobei die Steuereinheit eingerichtet ist, um die Zeichenfolge in eine Abfrage für die Informationsfolge zu übersetzen und sofort danach die Informationsfolge abzufragen.

18. Vorrichtung gemäß Anspruch 12, welche auch eine Anzeige umfasst, wobei die Zeichenfolge eine entsprechende Aufforderung umfasst und wobei die Steuereinheit eingerichtet ist, um die Anzeige zu betreiben, um die Aufforderung darzustellen und **dadurch** die Information abzufragen.

19. Vorrichtung gemäß Anspruch 12, welche auch eine Anzeige umfasst, wobei die Steuereinheit eingerichtet ist, um die Information durch ein Starten eines Konnektivitätssoftwareprogramms abzufragen und danach die Anzeige zu betreiben, um eine Abfrage der Information in dem Konnektivitätssoftwareprogramm darzustellen.

20. Eine Vorrichtung gemäß Anspruch 12, wobei die erste URL und die dynamische URL eine Domäne bezeichnen und wobei die Vorrichtung auch einen Übermittler umfasst, welcher eingerichtet ist, um von der Steuereinheit betrieben zu werden, um die abgefragte Information zu einem Ursprungsserver, welcher die in der dynamischen URL bezeichnete Domäne betreibt, zu übermitteln.

21. Vorrichtung gemäß Anspruch 20, wobei die Steuereinheit eingerichtet ist, um ein Konnektivitätssoftwareprogramm zu starten, das Konnektivitätssoftwareprogramm mit der dynamischen URL zu bestücken, den Übermittler zu betreiben, um eine Verbindung mit dem Ursprungsserver aufzubauen, welcher die in der dynamischen URL bezeichnete Domäne betreibt, und danach die abgefragte Information zu einem in der dynamischen URL bezeichneten Bestimmungsort zu übergeben.

22. Kommunikationssystem, welches umfasst:
eine Informationsquelle (66), die eingerichtet ist, um Information zu übermitteln, welche eine erste URL umfasst, die eine Zeichenfolge zur Übersetzung an einem Endgerät (10) umfasst, wobei die Informationsquelle eingerichtet ist, um die Information über eine kurzreichweitige drahtlose Kommunikationstechnik, welche Infrarot, Radiofrequenz, Barcode oder Bluetooth umfasst, zu übermitteln; und
eine Vorrichtung (10), eingerichtet, um über ein Kommunikationsnetzwerk zu kommunizieren, wobei die Vorrichtung eingerichtet ist, um Information, welche die erste URL umfasst, von der Informationsquelle zu empfangen, wobei die Vorrichtung eingerichtet ist, um die Zeichenfolge in wenigstens eine entsprechende Abfrage von Information von einem Benutzer oder einem Sensor der Vorrichtung zu übersetzen, und danach lokal die Information von einem Benutzer oder Sensor abzufragen, wobei die Vorrichtung auch eingerichtet ist, um eine Antwort auf die Abfrage von Information zu empfangen und danach die erste URL umzuformatieren, so dass sie die Antwort auf die Abfrage von Information enthält, um **dadurch** eine dynamische URL derart zu erzeugen, dass die Antwort auf die Abfrage von Information übermittelt werden kann.

23. Kommunikationssystem gemäß Anspruch 22, wobei sich die Informationsquelle nahe bei der Vorrichtung befindet.

24. Kommunikationssystem gemäß Anspruch 22, wobei die Vorrichtung eingerichtet ist, um die erste URL durch ein Ersetzen der Zeichenfolge durch die entsprechende abgefragte Information umzuformatieren.

25. Kommunikationssystem gemäß Anspruch 22, wobei die Zeichenfolge einen Standort der Vorrichtung darstellt und wobei die Vorrichtung eingerichtet ist, um die Zeichenfolge in eine Abfrage für den Standort der Vorrichtung von einem Standortsensor der Vorrichtung zu übersetzen und sofort danach den Standort abzufragen.

26. Kommunikationssystem gemäß Anspruch 25, wobei die Vorrichtung eingerichtet ist, um vor einem Empfangen des Standortes eine Erlaubnis abzufragen und wobei die Konfiguration der Vorrichtung, um die Antwort zu empfangen, eine Konfiguration umfasst, um den Standort zu empfangen, falls die Erlaubnis gegeben wird.

27. Kommunikationssystem gemäß Anspruch 22, wobei die Zeichenfolge einen numerischen Wert darstellt und wobei die Vorrichtung eingerichtet ist, um die Zeichenfolge in eine Abfrage für den numerischen Wert zu übersetzen und sofort danach den numerischen Wert abzufragen.

28. Kommunikationssystem gemäß Anspruch 22, wobei die Zeichenfolge eine Informationsfolge darstellt und wobei die Vorrichtung eingerichtet ist, um die Zeichenfolge in eine Abfrage für die Informationsfolge zu übersetzen und sofort danach die Informationsfolge abzufragen.

29. Kommunikationssystem gemäß Anspruch 22, wobei die Zeichenfolge eine entsprechende Aufforderung umfasst und wobei die Vorrichtung eingerichtet ist, um eine Anzeige der Aufforderung darzustellen, um **dadurch** die Information abzufragen.

30. Kommunikationssystem gemäß Anspruch 22, wobei die Vorrichtung eingerichtet ist, um die Information durch ein Starten eines Konnektivitätssoftwareprogramms abzufragen und danach eine Anzeige der Abfrage von Information in dem Konnektivitätssoftwareprogramm darzustellen.

31. Kommunikationssystem gemäß Anspruch 22, wobei die erste URL und die dynamische URL eine Domäne bezeichnen, wobei das System auch einen Ursprungsserver (40), welcher eingerichtet ist, um die in der dynamischen URL bezeichnete Domäne zu betreiben, umfasst und wobei die Vorrichtung eingerichtet ist, um die abgefragte Information zu dem Ursprungsserver zu übermitteln.

32. Kommunikationssystem gemäß Anspruch 31, wobei die Konfiguration der Vorrichtung, um die abgefragte Information zu übermitteln, eine Konfiguration umfasst, um ein Konnektivitätssoftwareprogramm zu starten, das Konnektivitätssoftwareprogramm mit der dynamischen URL zu bestücken, eine Verbindung mit dem Ursprungsserver aufzubauen und danach die abgefragte Information zu einem in der dynamischen URL bezeichneten Bestimmungsort zu übergeben.

## Revendications

1. Procédé de transmission d'informations en utilisant un localisateur de ressource uniforme, URL, le procédé comprenant les étapes consistant à :
recevoir des informations à un appareil (10) par l'intermédiaire d'une technique de communication sans fil de courte portée comprenant infrarouge, radiofréquences, codes-barres ou Bluetooth, dans lequel les informations comprennent un premier URL qui comprend une chaîne de caractères pour interprétation à l'appareil (10) ;
interpréter la chaîne de caractères en une demande associée d'informations à un utilisateur ou à un capteur de l'appareil, puis demander localement les informations à l'utilisateur ou au capteur ;
recevoir une réponse à la demande d'informations ; et
reformater le premier URL pour incorporer la réponse à la demande d'informations pour générer de ce fait un deuxième URL dynamique de sorte que la réponse à la demande d'informations puisse être transmise.

2. Procédé selon la revendication 1 dans lequel la réception d'informations à un appareil comprend l'étape consistant à recevoir des informations à l'appareil (10) d'une source d'informations (66), et dans lequel la source d'informations est située à proximité de l'appareil.

3. Procédé selon la revendication 1, dans lequel le reformatage du premier URL comprend l'étape consistant à reformater le premier URL en remplaçant la chaîne de caractères par les informations demandées respectives.

4. Procédé selon la revendication 1, dans lequel la chaîne de caractères représente un emplacement de l'appareil (10), et dans lequel l'interprétation de la chaîne de caractères comprend les étapes consistant à interpréter la chaîne de caractères en une demande de l'emplacement de l'appareil à un capteur d'emplacement de l'appareil, et immédiatement après demander l'emplacement.

5. Procédé selon la revendication 4, comprenant en outre l'étape consistant à demander une permission avant de recevoir l'emplacement, et
dans lequel la réception de la réponse comprend l'étape consistant à recevoir l'emplacement si la permission est accordée.

6. Procédé selon la revendication 1, dans lequel la chaîne de caractères représente une valeur numérique, et dans lequel l'interprétation de la chaîne de caractères comprend les étapes consistant à interpréter la chaîne de caractères en une demande de la valeur numérique, et immédiatement après demander la valeur numérique.

7. Procédé selon la revendication 1, dans lequel la chaîne de caractères représente une chaîne d'informations, et dans lequel l'interprétation de la chaîne de caractères comprend les étapes consistant à interpréter la chaîne de caractères en une demande de la chaîne d'informations, et immédiatement après demander la chaîne d'informations.

8. Procédé selon la revendication 1, dans lequel la chaîne de caractères comprend une invite associée, et dans lequel la demande d'informations comprend l'étape consistant à présenter un affichage de l'invite pour demander de ce fait les informations.

9. Procédé selon la revendication 1, dans lequel la demande des informations comprend les étapes consistant à lancer un programme logiciel de connectivité puis à présenter un affichage d'une demande des informations dans le programme logiciel de connectivité.

10. Procédé selon la revendication 1, dans lequel le premier URL et l'URL dynamique identifient un domaine, dans lequel le procédé comprend en outre une étape consistant à transmettre les informations demandées à un serveur d'origine (40) exploitant le domaine identifié dans l'URL dynamique.

11. Procédé selon la revendication 10, dans lequel la transmission des informations demandées comprend les étapes consistant à :
lancer un programme logiciel de connectivité puis renseigner l'URL dynamique dans le programme logiciel de connectivité ; et
établir une connexion avec le serveur d'origine exploitant le domaine identifié dans l'URL dynamique, puis transmettre les informations demandées à une destination identifiée dans l'URL dynamique.

12. Appareil (10) de transmission d'informations en utilisant un localisateur de ressource uniforme, URL, dans lequel l'appareil est apte à communiquer par l'intermédiaire d'un réseau de communication, l'appareil comprenant :
un contrôleur (50) configuré pour recevoir des informations par l'intermédiaire d'un dispositif de transfert de données local (61, 63) et d'une technique de communication sans fil de courte portée comprenant infrarouge, radiofréquences, codes-barres ou Bluetooth, les informations comprenant un premier URL qui comprend une chaîne de caractères pour interprétation à l'appareil (10) ;
dans lequel le contrôleur est configuré pour interpréter la chaîne de caractères en au moins une demande associée d'informations à un utilisateur ou à un capteur de l'appareil, puis demander localement les informations à l'utilisateur ou au capteur, dans lequel le contrôleur est également configuré pour recevoir une réponse à la demande d'informations et reformater le premier URL pour incorporer la réponse à la demande d'informations pour générer de ce fait un URL dynamique de sorte que la réponse à la demande d'informations puisse être transmise.

13. Appareil selon la revendication 12, dans lequel le contrôleur étant configuré pour reformater le premier URL est en outre configuré pour remplacer la chaîne de caractères par les informations demandées respectives.

14. Appareil selon la revendication 12, dans lequel la chaîne de caractères représente un emplacement de l'appareil, et dans lequel le contrôleur est configuré pour interpréter la chaîne de caractères en une demande de l'emplacement de l'appareil à un capteur d'emplacement de l'appareil, et immédiatement après demander l'emplacement.

15. Appareil selon la revendication 14, dans lequel le contrôleur est également configuré pour demander une permission avant de recevoir l'emplacement, et dans lequel le contrôleur est configuré pour recevoir l'emplacement si la permission est accordée.

16. Appareil selon la revendication 12, dans lequel la chaîne de caractères représente une valeur numérique, et dans lequel le contrôleur est configuré pour interpréter la chaîne de caractères en une demande de la valeur numérique, et immédiatement après demander la valeur numérique.

17. Procédé selon la revendication 12, dans lequel la chaîne de caractères représente une chaîne d'informations, et dans lequel le contrôleur est configuré pour interpréter la chaîne de caractères en une demande de la chaîne d'informations, et immédiatement après demander la chaîne d'informations.

18. Appareil selon la revendication 12, comprenant en outre un affichage, dans lequel la chaîne de caractères comprend une invite associée, et dans lequel le contrôleur est configuré pour amener l'affichage à présenter l'invite pour demander de ce fait les informations.

19. Appareil selon la revendication 12, comprenant en outre un affichage, dans lequel le contrôleur est configuré pour demander les informations en lançant un programme logiciel de connectivité puis amener l'affichage à présenter une demande des informations dans le programme logiciel de connectivité.

20. Appareil selon la revendication 12, dans lequel le premier URL et l'URL dynamique identifient un domaine, et dans lequel l'appareil comprend en outre un émetteur configuré pour être amené par le contrôleur à transmettre les informations demandées à un serveur d'origine exploitant le domaine identifié dans l'URL dynamique.

21. Appareil selon la revendication 20, dans lequel le contrôleur est configuré pour lancer un programme logiciel de connectivité, renseigner l'URL dynamique dans le programme logiciel de connectivité, amener l'émetteur à établir une connexion avec le serveur d'origine exploitant le domaine identifié dans l'URL dynamique, puis transmettre les informations demandées à une destination identifiée dans l'URL dynamique.

22. Système de communication comprenant :
une source d'informations (66) configurée pour transférer des informations comprenant un premier URL qui comprend une chaîne de caractères pour interprétation à un terminal (10), la source d'informations étant configurée pour transférer les informations par l'intermédiaire d'une technique de communication sans fil de courte portée comprenant infrarouge, radiofréquences, codes-barres ou Bluetooth ; et
un appareil (10) apte à communiquer par l'intermédiaire d'un réseau de communication, dans lequel l'appareil est configuré pour recevoir des informations comprenant le premier URL de la source d'informations, dans lequel l'appareil est configuré pour interpréter la chaîne de caractères en au moins une demande associée d'informations à un utilisateur ou un capteur de l'appareil, puis demander localement les informations à l'utilisateur ou au capteur, dans lequel l'appareil est également configuré pour recevoir une réponse à la demande d'informations, puis reformater le premier URL pour incorporer la réponse à la demande d'informations pour générer de ce fait un URL dynamique de sorte que la réponse à la demande d'informations puisse être transmise.

23. Système de communication selon la revendication 22, dans lequel la source d'information est située à proximité de l'appareil.

24. Système de communication selon la revendication 22, dans lequel l'appareil est configuré pour reformater le premier URL en remplaçant la chaîne de caractères par les informations demandées respectives.

25. Système de communication selon la revendication 22, dans lequel la chaîne de caractères représente l'emplacement de l'appareil, et dans lequel l'appareil est configuré pour interpréter la chaîne de caractères en une demande de l'emplacement de l'appareil à un capteur d'emplacement de l'appareil, et immédiatement après demander l'emplacement.

26. Système de communication selon la revendication 25, dans lequel l'appareil est configuré pour demander une permission avant de recevoir l'emplacement, et dans lequel l'appareil étant configuré pour recevoir la réponse est en outre configuré pour recevoir l'emplacement si la permission est accordée.

27. Système de communication selon la revendication 22, dans lequel la chaîne de caractères représente une valeur numérique, et dans lequel l'appareil est configuré pour interpréter la chaîne de caractères en une demande de la valeur numérique, et immédiatement après demander la valeur numérique.

28. Système de communication selon la revendication 22, dans lequel la chaîne de caractères représente une chaîne d'informations, et dans lequel l'appareil est configuré pour interpréter la chaîne de caractères en une demande de la chaîne d'informations, et immédiatement après demander la chaîne d'informations.

29. Système de communication selon la revendication 22, dans lequel la chaîne de caractères comprend une invite associée, et dans lequel l'appareil est configuré pour présenter un affichage de l'invite pour demander de ce fait les informations.

30. Système de communication selon la revendication 22, dans lequel l'appareil est configuré pour demander les informations en lançant un programme logiciel de connectivité puis présenter un affichage d'une demande des informations dans le programme logiciel de connectivité.

31. Système de communication selon la revendication 22, dans lequel le premier URL et l'URL dynamique identifient un domaine, dans lequel le système comprend en outre un serveur d'origine (40) configuré pour exploiter le domaine identifié dans l'URL dynamique, et dans lequel l'appareil est configuré pour transmettre les informations demandées au serveur d'origine.

32. Système de communication selon la revendication 37, dans lequel l'appareil étant configuré pour transmettre les informations demandées est en outre configuré pour lancer un programme logiciel de connectivité, renseigner l'URL dynamique dans le programme logiciel de connectivité, établir une connexion avec le serveur d'origine, puis transmettre les informations demandées à une destination identifiée dans l'URL dynamique.
